# FASCICULE DE BREVET EUROPEEN

(11) **EP 2 058 476 B1**
(45) Date de publication et mention de la délivrance du brevet: **07.08.2013**
(21) Numéro de dépôt: 08168168.6
(22) Date de dépôt: 03.11.2008
(51) Int. Cl.: F01D 25/16, F01D 9/04

(54) **Raccordement de bras radiaux a une virole circulaire par imbrication de pieces rapportees**
Verbindung von radialen Streben mit einem kreisförmigen Gehäuse durch Ineinandergreifen der eingesetzten Teile
Connection of radial struts to a circular casing by interleaving inserts

(30) Priorité: 09.11.2007 FR 0758938
(43) Date de publication de la demande: 13.05.2009
(73) Titulaire: SNECMA, 75015 Paris (FR)
(72) Inventeur: Drelon, Godefroy Francis, Frédéric, 42000 Saint-Etienne (FR); Prestel, Sébastien, Jean, Laurent, 91290 Arpajon (FR); Soupizon, Jean-Luc, 77530 Vaux le Penil (FR)
(74) Mandataire: Ilgart, Jean-Christophe

(56) Documents cités:
- EP-A- 0 171 329
- EP-A- 0 550 126
- FR-A- 2 106 561
- GB-A- 2 115 487
- GB-A- 2 262 573
- US-A- 2 693 904
- US-A- 2 834 537

## Description

Le sujet de cette invention est le raccordement de bras radiaux à une virole circulaire, notamment dans les turbomachines employées dans l'aéronautique, au moyen d'une imbrication de pièces rapportées.

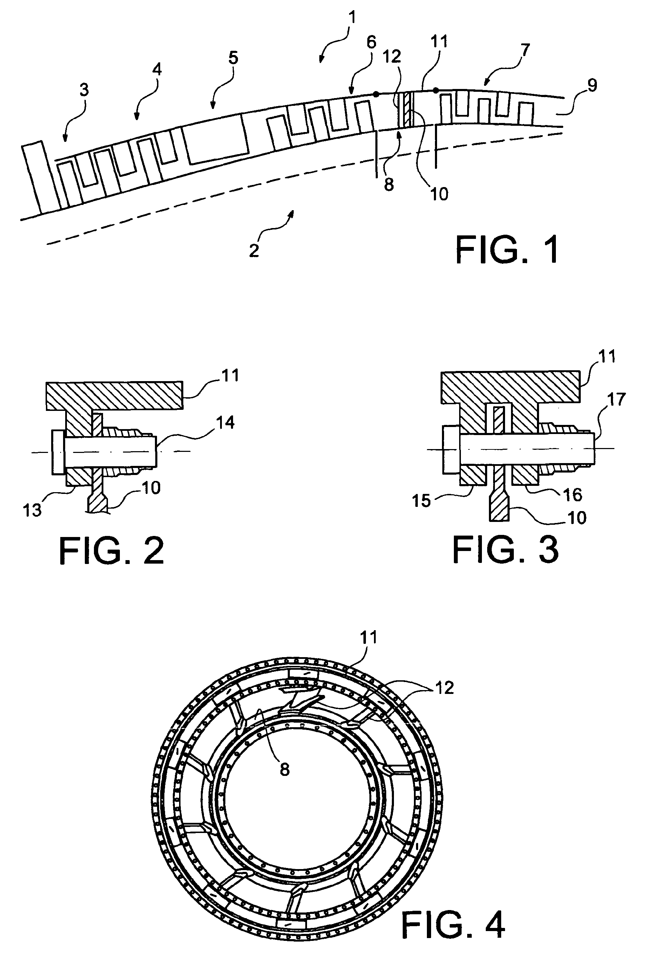

Certains agencements de ces turbomachines comprennent une virole extérieure concentrique à une virole d'un moyeu intérieur et jointe à elle par des bras radiaux et délimitant une chambre annulaire ou une portion de veine d'écoulement des gaz, elle aussi annulaire mais ouverte à ses extrémités axiales. Un exemple apparaît à la figure 1, qui représente de façon partielle et schématique une turbomachine comprenant classiquement, entre un stator 1 et un rotor 2, successivement des compresseurs à basse pression 3 et haute pression 4, une chambre de combustion 5, et des turbines à haute pression 6 et basse pression 7 ; le rotor 2 peut se trouver divisé en deux parties séparées entre les turbines 6 et 7, et un moyeu intérieur 8 s'étend entre ces deux parties pour maintenir une forme lisse d'une veine 9 d'écoulement des gaz dans la turbomachine. Le moyeu intérieur 8 est soutenu par des bras 10 essentiellement radiaux qui joignent sa virole (circulaire intérieure) à une virole extérieure 11 concentrique appartenant au stator 1 et qui délimite aussi la veine 9 d'écoulement des gaz, du côté extérieur opposé. Les bras 10 sont des profilés de section simple, généralement rectangulaire. Ils sont soumis aux températures élevées atteintes par les gaz de combustion, tout en influant sur leur écoulement. Il est nécessaire de les entourer de carénages 12 séparés d'eux d'un jeu suffisant, pour les protéger quelque peu de l'échauffement et pour offrir un profil de contournement de bonne qualité aérodynamique aux gaz. Comme ils sont aussi des bras structuraux de la machine, des efforts importants passent par eux et obligent à leur donner une résistance suffisante ainsi qu'à leurs raccordements.

La figure 4 illustre l'assemblage de la virole extérieure 11, des bras 12 et du moyeu intérieur 8 de la turbine à l'état isolé ; afin d'en donner une idée plus nette, les brides d'assemblage (non référencées) au stator 1 et au rotor 2 y apparaissent.

Des difficultés apparaissent pour faire l'assemblage des bras 10 à la virole extérieure 11, que les bras 10 soient d'une pièce avec le moyeu intérieur 8 ou aient été assemblés auparavant à lui, puisque les carénages 12, enfilés autour des bras 10, ne laissent que peu de jeu jusqu'à la virole extérieure 11.

Le mouvement d'accostage des bras 10 aux emplacements d'assemblage de la virole extérieure 11 est donc délicat à réaliser, de même que l'introduction des outils nécessaires à l'assemblage à travers le jeu des carénages 12. Le raccordement entre les bras 10 et la virole extérieure 11 doit être conçu pour satisfaire à ces contraintes, mais aussi pour tenir aux efforts importants exercés sur les bras en service et aux échauffements importants qu'ils subissent malgré les carénages 12.

Un montage classique, illustré à la figure 2, consiste à réaliser un perçage à l'extrémité de chaque bras 10, à établir une oreille 13 percée sur la virole extérieure 11, à placer le bras 10 contre l'oreille 13 de façon à aligner son perçage avec le perçage de l'oreille, et à faire passer un boulon 14 à travers l'alignement des perçages et qui fait office d'axe de support ; mais les efforts subis par le bras 10 soumettent les pièces de l'assemblage à des efforts plus importants à cause du porte-à-faux du montage, et notamment le boulon est chargé en flexion, ce qui est désavantageux et oblige à bien sur-dimensionner les pièces du raccordement, de façon à résister aux contraintes de flexion plus importantes que dans le cas d'une configuration symétrique à deux oreilles. C'est pourquoi, dans une autre conception, illustrée à la figure 3, la virole extérieure 11 est pourvue de deux oreilles parallèles 15 et 16 entre lesquelles l'extrémité du bras 10 est placée et un boulon 17 est monté en passant par les perçages du bras 10 et des deux oreilles 15 et 16. Les efforts de flexion sont alors réduits, et le raccordement peut être construit de façon plus légère, mais un dilemme apparaît alors : si les oreilles 15 et 16 sont écartées (ce qui peut être imposé par un montage qui nécessite une approche du bras 10 dans une direction non parallèle aux faces des oreilles 15 et 16), le montage est facile mais le boulon 17 subit un cisaillement et une flexion importants (même si la flexion est moins importante grâce à la symétrie de la configuration) et le montage possède du jeu ; et rapprocher les oreilles 15 et 16 l'une de l'autre lors de montage, en serrant le boulon 17, n'est pas avantageux car les contraintes internes deviennent excessives et le boulon 17 se grippera plus facilement ; si au contraire les oreilles 15 et 16 sont construites proches l'une de l'autre, le jeu avec l'extrémité du bras 10 devient faible ou même nul et la flexion du boulon 17 disparaît, mais il devient difficile d'introduire les bras 10 entre les oreilles 15 et 16, voire impossible si les bras 10 sont dirigés avec une inclinaison dans la direction angulaire de la machine, ce qui est très fréquent d'après le redressement d'écoulement des gaz qu'ils doivent exercer, car le montage doit s'effectuer alors selon un mouvement en hélice qui ne permet pas d'exercer des efforts nécessaires à l'introduction.

D'autres conceptions de raccordement entre les bras et la virole extérieure font appel à des pièces intermédiaires, assemblées à la fois à la virole et aux bras. Un exemple est dans le document US 5 272 869. Elles présentent souvent les inconvénients d'avoir des dimensions excessives pour permettre un montage aisé et sont généralement boulonnées aux bras, avec le risque de rendre le démontage des bras impossible si les boulons se grippent.

Ce dernier inconvénient subsiste dans d'autres raccordements, d'après lesquels les bras sont unis directement à la virole par des boulons traversant celle-ci et orientés parallèlement à la direction des bras. Un exemple est dans le document US 6 439 841. Les vis peuvent être engagées dans des douilles taraudées serties dans des perçages du bras, ou engagées avec du jeu dans des perçages lisses du bras qui débouchent sur des ouvertures dans lesquelles on peut introduire et visser les écrous des boulons.

Il existe enfin des agencements où les bras sont munis d'ailes ou de collerettes latérales retenues dans des pièces de calage boulonnés à la virole, les ailes étant retenues entre la virole et d'autres ailes, qui saillent des pièces de calage. Cette conception est appliquée entre autres dans les documents GB-A- 2262 573 et EP-A - 0 550 126. Elle évite la plupart des inconvénients des conceptions précédentes mais possède l'inconvénient de ne pas bien assurer la position des bras à la surface de la virole, puisqu'ils peuvent être montés avec imprécision ou se déplacer en service sous les efforts qu'ils subissent, étant en général des bras structuraux montés entre deux viroles concentriques. Les documents mentionnés ci-dessous sont plutôt relatifs à des tuyaux ou des manchons creux et souples, sans caractère de résistance structurale et qui subissent peu d'efforts.

Sous une forme générale, l'invention concerne un agencement comprenant une virole circulaire, des bras essentiellement radiaux joignant la virole à une autre virole concentrique, et des raccordements des bras à la virole, où les raccordements comprennent des ailes saillant de deux côtés opposés du bras, des cales comprenant des ailes saillantes, des perçages de la virole et des perçages des cales, et des boulons traversant des alignements comprenant chacun un des perçages de la virole et un des perçages des cales, et retenant les cales contre la virole, les ailes du bras étant respectivement retenues entre les ailes des cales et la virole.

Les avantages obtenus au moyen des raccordements boulonnés comprennent les cales et les imbrications d'ailes selon la définition précédente peuvent être explicités comme voici : le montage du raccordement est facile, même avec les accès réduits dont le carénage est responsable ; les pièces du raccordement sont simples, de petit volume et peu pesantes ; des efforts supplémentaires redevables à des porte-à-faux ou à des déformations au montage sont évitées ; les boulons sont disjoints du bras, en contact avec des pièces moins chaudes, et donc moins sujets aux échauffements et aux grippages.

L'agencement est caractérisé en ce qu'il comprend des alignements d'autres perçages de la virole et de perçages du bras, ces alignements étant occupés par des pions de centrage. La combinaison de ces raccordements boulonnés et des agencements à pions de centrage permet encore de maintenir fermement les bras à une position latérale invariable sur la surface de la virole et de découpler les efforts passant par les bras, les efforts axiaux étant absorbés par les vis et les efforts tangentiels par les pions.

Au sens de l'invention, la virole raccordée aux bras de la façon indiquée peut être la virole extérieure 11, comme il est usuel, mais aussi la virole circulaire du moyeu intérieur 8 : l'agencement serait le même hors quelques modifications de dimensions.

Un autre aspect de l'invention est une turbomachine comprenant l'agencement de raccordement détaillé ci-dessus.

L'invention sera maintenant décrite plus en détail et sous les aspects de quelques modes de réalisation en référence aux figures suivantes :
- la figure 1 déjà décrite représente une turbomachine équipée de l'invention ;
- les figures 2 et 3 déjà décrites représentent deux modes de réalisation ou d'assemblage conformes à l'art connu ;
- la figure 4 déjà décrite représente une autre vue de l'assemblage de la virole et des bras ;
- et les figures 5, 6, 7, 8, 9, 10 et 11 représentent plus précisément les raccordement des viroles au bras, la figure 5 étant une vue générale, les figures 6 et 7 des vues de certains éléments isolés, les figures 8 et 9 des vues suivant les lignes VIII-VIII et IX-IX de la figure 5, et les figures 10 et 11 deux possibilités de construction des ailes.

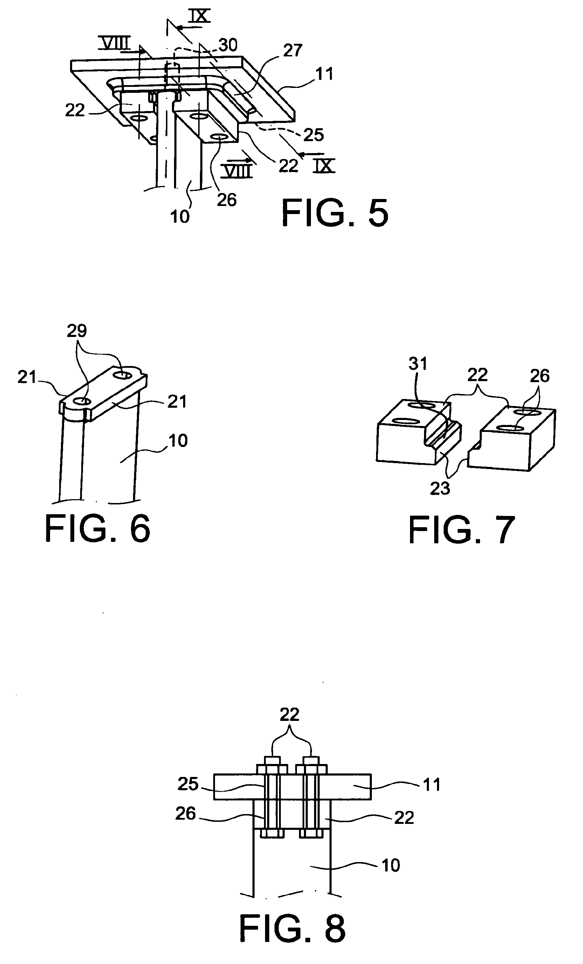

L'extrémité du bras 10 adjacente à la virole extérieure 11 porte deux ailes latérales 21 en saillie sur ses côtés longs (figure 6). L'assemblage comprend encore principalement deux pièces rapportées appelées cales 22 semblables, disposées symétriquement et pourvues chacune d'une aile 23 saillante (figure 7). Les ailes 23 des cales 22 se placent sous les ailes 21 du bras 10 et l'imbrication ainsi faite maintient l'extrémité du bras 10 contre la virole extérieure 11 (figure 5). L'assemblage est complété par des boulons traversant des alignements de perçages 25 à travers la virole extérieure 11 et 26 à travers les cales 22. On trouve quatre de ces alignements de perçages et quatre boulons, deux pour chacune des cales 22.

La virole extérieure 11 est munie d'un bossage 27 (figure 5) à chacun des raccordements de bras 10 et dont la surface est plane ou cylindrique, le cylindre admettant un axe confondu avec celui de la turbomachine. Un intérêt des bossages 27 est de simplifier localement la forme de la virole extérieure 11, qui est généralement conique. Ainsi, le composé des bras 10 et du carénage 12 peut être introduit beaucoup plus facilement à la position du montage.

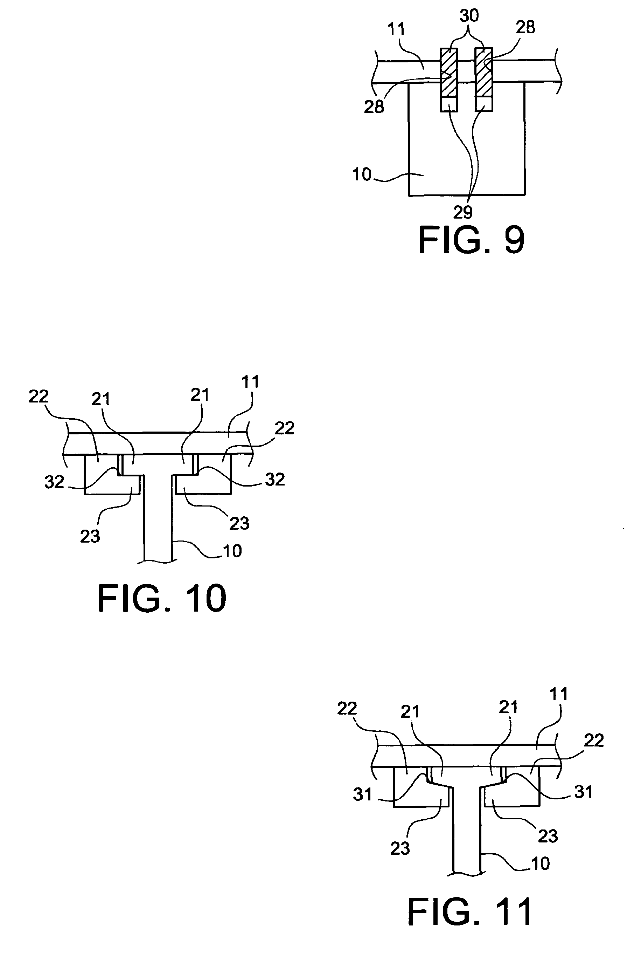

On rencontre d'autres alignements de perçages 28 et 29, qui traversent ici respectivement la virole extérieure 11 et l'extrémité du bras 10 (figure 9). Ils reçoivent des pions de centrage 30 du bras 10 et assurent donc son maintien à une place fixe. Ces alignements de perçages peuvent être au nombre de deux.

L'appui des ailes 21 et 23 du bras 10 et des cales 22 peut se faire de plusieurs façons, soit par des faces toutes parallèles entre elles et à la virole extérieure 11 (32 à la figure 10), soit par des faces chanfreinées d'orientation oblique (31 aux figures 7 et 11), faisant des angles entre elles, et en dépouille à partir du bras 10 pour les faces 31 sur les ailes 21 du disque 10, à partir des cales 22 pour les faces 31 sur les ailes 23 des cales 22. Des appuis complexes, par plusieurs faces étagées en gradins, sont possibles aussi. Les faces en contact mutuel aux ailes 21 et 23 auront en général la même orientation afin d'assurer des contacts sur des surfaces entières.

L'invention pourrait être utilisée dans d'autres situations, et notamment dans d'autres turbomachines. Au lieu d'être placée entre les turbines à haute pression 6 et à basse pression 7, elle pourrait aussi être placée ailleurs, par exemple entre les compresseurs à basse pression 3 et à haute pression 4.

## Revendications

1. Agencement comprenant une virole (11) circulaire, un moyeu intérieur (8) circulaire, des bras (10) essentiellement radiaux, joignant la virole (11) à une virole du moyen intérieur (8) concentrique, et des raccordements des bras à la virole, les raccordements comprennent des ailes (21) saillant de deux côtés opposés du bras (10), des cales (22) comprenant des ailes (23) saillantes, des perçages (25) de la virole (11) et des perçages (26) des cales, et des boulons traversant des alignements comprenant chacun un des perçages de la virole (11) et un des perçages des cales, et retenant les cales contre la virole (11), les ailes (21) du bras (10) étant respectivement retenues entre les ailes (23) des cales (22) et la virole (11),**caractérisé en ce qu'**il comprend des alignements d'autres perçages (28) de la virole (11) et de perçages (29) du bras (10), ces alignements étant occupés par des pions de centrage (30).

2. Agencement selon la revendication 1, **caractérisé en ce que** les ailes des cales et les ailes du bras sont en contact par des faces (32) toutes parallèles entre elles.

3. Agencement selon la revendication 1, **caractérisé en ce que** les ailes des cales et les ailes du bras sont en contact par des faces (31) formant des angles entre elles, les ailes des cales et du bras étant en dépouille à partir des cales et du bras, respectivement.

4. Turbomachine, **caractérisée en ce qu'**elle comprend un agencement conforme à l'une quelconque des revendications précédentes.

5. Turbomachine selon la revendication 4, **caractérisée en ce que** les bras (10) sont entourés de carénages (12).

6. Turbomachine selon l'une quelconque des revendications 4 ou 5, **caractérisée en ce que** la virole (11), l'autre virole (8) et les bras sont présents entre une turbine à haute pression (6) et une turbine à basse pression (7), les bras (10) traversant une veine d'écoulement (9) de gaz de combustion.

## Patentansprüche

1. Anordnung, die ein kreisförmiges Gehäuse (11), eine kreisförmige innere Nabe (8), Streben (10), die im wesentlichen radial verlaufen und das Gehäuse (11) mit einem konzentrischen Gehäuse der inneren Nabe (8) verbinden, sowie Verbindungsteile zur Befestigung der Streben an dem Gehäuse umfasst, wobei die Verbindungsteile aus Flügeln (21) bestehen, die an zwei einander gegenüberliegenden Seiten der Strebe (10) hervorstehen, sowie aus Klötzen (22), die hervorstehende Flügel (23) aufweisen, sowie aus Durchbohrungen (25) in dem Gehäuse (11) und Durchbohrungen (26) in den Klötzen, sowie aus Bolzen, die durch Fluchtlinien verlaufen, auf denen jeweils eine der Durchbohrungen in dem Gehäuse (11) und eine der Durchbohrungen in den Klötzen liegen, und die die Klötze an dem Gehäuse (11) befestigen, wobei die Flügel (21) der Strebe (10) jeweils zwischen den Flügeln (23) der Klötze (22) und dem Gehäuse (11) festgehalten werden,
**dadurch gekennzeichnet,**
**dass** sie Fluchtlinien anderer Durchbohrungen (28) in dem Gehäuse (11) und Durchbohrungen (29) in der Strebe (10) aufweist, wobei diese Fluchtlinien von Zentrierzapfen (30) besetzt sind.

2. Anordnung nach Anspruch 1,
**dadurch gekennzeichnet,**
**dass** die Flügel der Klötze und die Flügel der Strebe sich mit Seiten (32), die vollkommen parallel zueinander liegen, in Kontakt miteinander befinden.

3. Anordnung nach Anspruch 1,
**dadurch gekennzeichnet,**
**dass** die Flügel der Klötze und die Flügel der Strebe sich mit Seiten (31), die gewinkelt zueinander stehen, in Kontakt miteinander befinden, wobei die Flügel der Klötze und der Strebe von den Klötzen und der Strebe aus jeweils abgeschrägt ausgeführt sind.

4. Turbotriebwerk,
**dadurch gekennzeichnet,**
**dass** es eine Anordnung nach einem der vorherigen Ansprüche aufweist.

5. Turbotriebwerk nach Anspruch 4,
**dadurch gekennzeichnet,**
**dass** die Streben (10) von Verkleidungen (12) umgeben sind.

6. Turbotriebwerk nach einem der Ansprüche 4 oder 5,
**dadurch gekennzeichnet,**
**dass** das Gehäuse (11), das andere Gehäuse (8) und die Strebe zwischen einer Hochdruckturbine (6) und einer Niederdruckturbine (7) angeordnet sind, wobei die Streben (10) durch eine Strömungsbahn (9) der Verbrennungsgase hindurch verlaufen.

## Claims

1. An arrangement comprising a circular ferrule (11), a circular inner hub (8), substantially radial arms (10) joining the ferrule (11) to a concentric ferrule of the inner hub (8), and connections of the arms to the ferrule, the connections comprise wings (21) protruding from two opposite sides of the arm (10), keys (22) comprising protruding wings (23), drillings (25) of the ferrule (11) and drillings (26) of the keys, and bolts passing through alignments, each comprising one of the drillings of the ferrule (11) and one of the drillings of the keys, and retaining the keys against the ferrule (11), the wings (21) of the arm (10) being respectively retained between the wings (23) of the keys (22) and the ferrule (11), **characterized in that** the arrangement comprises alignments of other drillings (28) of the ferrule (11) and drillings (29) of the arm (10), these alignments being occupied by centring pins (30).

2. The arrangement according to claim 1, **characterized in that** the key wings and the arm wings are in contact through faces (32) all parallel to one another.

3. The arrangement according to claim 1, **characterized in that** the key wings and the arm wings are in contact through faces (31) forming angles therebetween, the key and arm wings being tapered from the keys and the arm, respectively.

4. A turbo-machine, **characterized in that** it comprises an arrangement according to any of the preceding claims.

5. The turbo-machine according to claim 4, **characterized in that** the arms (10) are surrounded with fairings (12).

6. The turbo-machine according to any of claims 4 and 5, **characterized in that** the ferrule (11), the other ferrule (8) and the arms are located between a high pressure turbine (6) and a low pressure turbine (7), the arms (10) passing through a stream (9) of combustion gas.
